# EUROPÄISCHE PATENTSCHRIFT

(11) **EP 1 543 394 B1**
(45) Veröffentlichungstag und Bekanntmachung des Hinweises auf die Patenterteilung: **17.05.2006**
(21) Anmeldenummer: 03738118.3
(22) Anmeldetag: 04.07.2003
(51) Int. Cl.: G05B 23/02, G05B 13/02, G05B 17/02

(54) **VORRICHTUNG UND VERFAHREN ZUR ÜBERWACHUNG EINER MEHRERE SYSTEME UMFASSENDEN TECHNISCHEN ANLAGE, INSBESONDERE EINER KRAFTWERKSANLAGE**
METHOD AND DEVICE FOR MONITORING A TECHNICAL INSTALLATION COMPRISING SEVERAL SYSTEMS, IN PARTICULAR AN ELECTRIC POWER STATION
PROCEDE ET DISPOSITIF POUR SURVEILLER UNE INSTALLATION TECHNIQUE COMPRENANT PLUSIEURS SYSTEMES, NOTAMMENT UNE CENTRALE ELECTRIQUE

(30) Priorität: 26.09.2002 EP 02021501
(43) Veröffentlichungstag der Anmeldung: 22.06.2005
(73) Patentinhaber: SIEMENS AKTIENGESELLSCHAFT, 80333 München (DE)
(72) Erfinder: FICK, Wolfgang, 81371 München (DE); APPEL, Mirko, 81673 München (DE); GERK, Uwe, 96158 Frensdorf (DE)
(86) Internationale Anmeldenummer: PCT/EP2003/007202
(87) Internationale Veröffentlichungsnummer: WO 2004/034166

(56) Entgegenhaltungen:
- US-A1- 2002 072 828
- US-A1- 2002 133 320
- US-B1- 6 278 962
- US-B1- 6 353 815
- US-B1- 6 438 430

## Beschreibung

Die Erfindung betrifft eine Vorrichtung sowie ein Verfahren zur Überwachung einer mehrere Systeme umfassenden technischen Anlage, insbesondere einer Kraftwerksanlage.

Herkömmliche Vorrichtungen und Verfahren zur Überwachung einer mehrere Systeme umfassenden technischen Anlage, insbesondere Diagnoseverfahren und Diagnosegeräte, stützen sich oftmals auf die Beobachtung und/oder Messung von bestimmten Betriebsparametern der technischen Anlage, wobei ein Über- oder Unterschreiten eines Soll-Wertes eine Wartungsmaßnahme nahe legt.

Naturgemäß ist dabei die Ableitung einer notwendigen Handlungsmaßnahme bei Betrachtung von isoliert gemessenen Parametern ungenau und fehleranfällig.

Werden andererseits eine Fülle von Daten, welche in der technischen Anlage anfallen, insbesondere Messwerte verschiedenster Messstellen und/oder entsprechende gespeicherte, historische Messwerte, herangezogen, um sich ein Bild über den momentanen oder zukünftig erwarteten Betriebszustand zu machen, so führt dies ebenfalls zu keiner befriedigenden Aussage, da die gegenseitigen Abhängigkeiten dieser Daten aus i.A. verschiedensten Datenquellen meist nicht bekannt sind und daher daraus auch keine genaue Beurteilung oder gar Vorhersage der Betriebssituation möglich ist.

Außerdem ist zu erwarten, dass nicht alle Daten, welche einen Einfluss auf die Betriebssituation der Anlage ausüben, erfasst werden, was das Problem weiter kompliziert macht.

Das Dokument US 6,353,815 B1 offenbart ein Verfahren und eine Vorrichtung zur Prozessüberwachung. Durch die Entwicklung und Anwendung eines sog. SQNA-Modells (statistically qualified neuro-analytic model) werden Prozessveränderungen erkannt. Das SQNA-Modell wird in zwei Schritten entwickelt.

Im ersten Schritt wird ein bereits bestehendes/hinterlegtes deterministisches Grundmodell des zu überwachenden Prozesses, welches beispielsweise durch Formeln hinterlegt ist und den Prozess physikalisch beschreibt, um ein neuronales Netzwerk ergänzt.
In einem zweiten Schritt werden die Parameter des neuronalen Netzwerks angepasst. Dabei wird die beabsichtigte Anpassung durch stochastische Verfahren bewertet und die Parameter entsprechend modifiziert.

Durch die aus dem Dokument US 6,353,815 B1 hervorgehende Lehre, kann lediglich ein bereits bestehendes deterministisches Grundmodel durch ein neuronales Netzwerk und eine statistische Bewertung modifiziert werden. Es ist nicht möglich ein dynamisches Modell ohne ein deterministisches Grundmodell zu erzeugen oder ein dynamisches Model grundlegend zu verändern, beispielsweise so, dass alle zuvor durch das deterministische Grundmodell festgelegten Eingangsgrößen als vernachlässigbar betrachtet werden oder das deterministische Grundmodell beispielsweise durch einen neuronales Netzwerk ersetzt wird, da dies zuverlässigere Ergebnisse liefert als ein parametriertes deterministisches Grundmodell.

Der Erfindung liegt daher die Aufgabe zu Grunde, eine verbesserte Vorrichtung sowie ein Verfahren zur Überwachung einer mehrere Systeme umfassenden technischen Anlage, insbesondere einer Kraftwerksanlage, anzugeben. Dabei soll insbesondere eine hohe Voraussagegenauigkeit hinsichtlich eines sich entwickelnden Fehlers in der technischen Anlage erzielbar sein.

Auch sogenannte "schleichende Prozessabweichungen", die von einer gewünschten Betriebssituation wegführen und dem Auftreten eines Fehlers und/oder einer Prozessstörung praktisch immer vorausgehen, sollen möglichst frühzeitig erkannt werden können.

Weiterhin soll mittels einer erfindungsgemäßen Vorrichtung bzw. eines entsprechenden Verfahrens der erwartete Zeitpunkt des Auftretens eines Fehlers in der technischen Anlage möglichst frühzeitig ermittelbar sein, so dass Gegenmaßnahmen, beispielsweise eine Wartungsmaßnahme, eingeleitet werden können, bevor ein Ausfall der Anlage oder ihrer Komponenten eintritt.

Ferner sollen eine erfindungsgemäße Vorrichtung sowie ein entsprechendes Verfahren den Aufwand an bisher üblichen Diagnoseapplikationen in der Anlage reduzieren und darüber hinaus eine bessere Optimierung der eingesetzten Regelungsvorrichtungen erlauben.

Die Aufgabe wird bezüglich der Vorrichtung erfindungsgemäß gelöst durch eine Vorrichtung zur Überwachung einer mehrere Systeme umfassenden technischen Anlage, insbesondere einer Kraftwerksanlage, gemäß Anspruch 1.

Die Erfindung geht dabei von der Überlegung aus, dass bei herkömmlichen, aus dem Stand der Technik bekannten Modellierungen die erzielbare Genauigkeit, also der erzielbare Grad an Übereinstimmung der ermittelten Modellgrößen mit den entsprechenden realen Größen zu klein ist, um sichere Aussagen über ein zukünftiges Verhalten der Anlage zu machen. Für einen gegenwärtigen Zeitpunkt bieten bekannte Modellierungen meist brauchbare Ergebnisse, d.h. es liegt eine hoher Grad an Übereinstimmung mit den entsprechenden realen Größen zum gegenwärtigen Zeitpunkt vor. Um so entfernter jedoch der interessierende Zeitpunkt des Verhaltens der Anlage in der Zukunft liegt, desto größer wird die Voraussageunsicherheit.

Ein weiterer Ansatzpunkt der Erfindung liegt in der Erkenntnis, dass es in vielen Fällen unmöglich oder nur unter extrem hohen Aufwand möglich ist, ein einigermaßen genaues Modell der technischen Anlage anzugeben (beispielsweise wegen eines stark nichtlinearen Verhaltens einiger Systeme der technischen Anlage).

Bei der erfindungsgemäßen Vorrichtung wird von einem dynamischen Modell mindestens eines Systems der technischen Anlage ausgegangen, welches während des Betriebs mittels Methoden der künstlichen Intelligenz verbessert wird. Dadurch wird die Fähigkeit des Analysemoduls verbessert, das Betriebsverhalten des Systems zu beschreiben und zu prognostizieren.

Dabei ist es nicht zwingend notwendig, mit einem komplexen, einheitlichen dynamischen Modell des Systems zu starten. Oftmals genügt beispielsweise ein Satz an wenigen insulären, einfachen Gleichungen und Kennlinien, welche ergänzt sein können durch ein bevorzugt einfach aufgebautes neuronales Netz, Fuzzy Logic oder einen genetischen Algorithmus. Das Zusammenwirken zwischen diesen "Teil-Modellen" zu einer Systembeschreibung wird dann während des Betriebs durch den KI-basierten Algorithmus verbessert, so dass ein Zusammenhangsgeflecht der genannten Elemente entsteht.

Ein Modell, insbesondere ein deterministisches, im klassischen Sinn ist nicht erforderlich. Vielmehr wird das genannte Zusammenhangsgeflecht parametriert (z.B. eine Bernoulli-Gleichung dieses Geflechts, um diese auf eine konkret vorliegende Strömung anzuwenden) und der KI-basierte Algorithmus sucht in historischen oder momentanen Betriebsdaten und/oder Strukturdaten des Systems und/oder der technischen Anlage nach Zusammenhängen, z.B. Änderungen von Größen, welche sich in Folge der Änderung anderer Größen einstellen. Derartige neu entdeckte Zusammenhänge werden dann durch den KI-basierten Algorithmus in das dynamische Modell integriert - insbesondere als zusätzliche Kennlinie und/oder Gleichung oder als eine Anpassung von Parametern des dynamischen Modells, beispielsweise der Netzgewichtsfaktoren eines neuronalen Netzes, - und dieses dadurch verbessert.

Der Begriff "System" soll im Zusammenhang mit der Erfindung den Bereich von einer einfachen Komponente - beispielsweise eine Rohrleitung - bis hin zu einem hoch komplexen Gesamtsystem, umfassend eine Anzahl an Teilsystemen, - beispielsweise ein Turbinensatz, eine Kesselanlage, ein Kraftwerksblock oder das gesamte Kraftwerk - abdecken.

Unter "Betriebsdaten" werden insbesondere alle Arten von Daten verstanden, die beim Betrieb der technischen Anlage anfallen wie beispielsweise Temperaturmesswerte, Druckmessdaten, Wärmebilder, Sensordaten, Meldungen, Alarme, Warnungen usw.

Der "KI-basierte Algorithmus" umfasst insbesondere Methoden der künstlichen Intelligenz wie neuronale Netze, Fuzzy Logic und genetische Algorithmen.

Das "dynamische Modell" kann deterministisch und numerisch oder auch mittels KI-basierter Methoden beschrieben sein. Es kann weiterhin physikalische und mathematische Gleichungen umfassen. Auch Kombinationen der genannten Elemente sind umfasst, insbesondere physikalische und/oder mathematische Gleichungen, die durch KI-basierte Methoden verknüpft sind.

In einer bevorzugten Ausführungsform umfasst die Verbesserung des dynamischen Modells die Identifizierung von solchen Eingabedaten, welche zuvor noch nicht vom dynamischen Modell genutzt sind, und mit Hilfe dieser Eingabedaten ist das dynamische Modell erweiterbar.

Dabei wird der KI-basierte Algorithmus bei der Verbesserung des dynamischen Modells zur Identifikation und Etablierung von im dynamischen Modell noch nicht berücksichtigter Zusammenhänge verwendet.

Bevorzugt umfasst das dynamische Modell ein oder mehrere Elemente aus der Gruppe (Kennlinie, physikalische Gleichung, neuronales Netz, Fuzzy Logic, genetischer Algorithmus).

Insbesondere umfasst das dynamische Modell mindestens ein neuronales Netz, welches mit historischen Betriebsdaten des Systems trainierbar ist.

Die Modellierung technischer Komponenten und Anlagen mittels neuronaler Netze ist ein bekanntes und bewährtes Verfahren. Ein besonderer Vorteil ist darin zu sehen, dass eine analytische Beschreibung der zu modellierenden Komponente nicht bekannt sein muss. Durch die Trainingsphase (welche beispielsweise einen bekannten Backpropagation-Algorithmus umfasst) wird die zuerst mittels Startparameter ("Start-Gewichtsfaktoren") initialisierte, vorab festgelegte Struktur des neuronalen Netzes hinsichtlich ihrer Gewichtsfaktoren ausgebildet, so dass nach Abschluss der Trainingsphase eine gute Übereinstimmung mit der realen Komponente erwartet werden kann. Auf diese Weise erhält man ein Modell der Komponente, ohne eine genaue, analytische Analyse vornehmen zu müssen. In der Trainingsphase lernt das neuronale Netz, auf bestimmte Eingangswerte mit bestimmten Ausgangswerten zu reagieren; derartige Eingangswerte werden zusammen mit ihren korrespondierenden Ausgangswerten oft als Trainingsmenge bezeichnet. Im Betrieb interpoliert dann das neuronale Netz für Eingangswerte, welche nicht von der Trainingsmenge umfasst sind, so dass auch für derartige Eingangswerte Ausgangswerte errechnet werden.

Beim Betrieb der technischen Anlage zeigt sich oft das Problem, dass nicht alle Betriebsdaten, welche einen Einfluss auf das Verhalten der zu modellierenden Komponente(n) oder auch der gesamten technischen Anlage nehmen, bekannt oder erfassbar sind.

Der Einsatz des mindestens einen KI-basierten Algorithmus ermöglicht es weiterhin, auch solche Parameter in die Berechnungen des Zustandes des Systems der technischen Anlage mittels des dynamischen Modells einzubeziehen, die nicht direkt auf dieses System der technischen Anlage wirken, beispielsweise als Ein- und/oder Ausgangssignale oder Medienströme. Beispielsweise kann bei einer seriell angeordneten Kette von Systemen die Modellierung eines in der Mitte dieser Kette befindlichen Systems vorgesehen sein, welches - neben gegebenenfalls direkt auf dieses System einwirkenden Eingangssignalen - vom vorangehenden System Eingangssignale, die nicht messtechnisch oder auf andere Weise zugänglich sind, erhält.

Die Methoden der künstlichen Intelligenz (die in Anlehnung an die biologische Evolution beispielsweise als genetische Suchalgorithmen nach einer geeigneten Merkmalskombination ausgebildet sein können) erlauben dabei auch dann eine Berechnung des Zustandes eines Systems der technischen Anlage, wenn die Eingangsparameter zur Bestimmung des Ist-Zustandes weitgehend unbekannt oder nur schwer ermittelbar sind, beispielsweise - wie vorher genannt - mittels einer aufwendigen Messung der Ausgangswerte des vorangehenden Systems.

Dabei können z.B. auch statistische Methoden im Zusammenhang mit dem KI-basierten Algorithmus eingesetzt werden, wobei die wahrscheinlichsten Ein- und/oder Ausgangswerte eines Systems, die nicht anderweitig zugänglich sind, in einer aktuellen Betriebssituation ermittelt werden, indem der KI-basierte Algorithmus diese vom dynamischen Modell benötigten Ein- und/oder Ausgangswerte des betreffenden Systems beispielsweise durch eine evolutionäre Suchstrategie ermittelt.

Auf diese Weise kann eine gute Übereinstimmung des Modells des mindestens einen Systems mit dem realen Verhalten dieses Systems erwartet werden, da mittels des mindestens einen KI-basierten Algorithmus auch solche Betriebsdaten in die Modellierung des Systems einbezogen werden, die ansonsten außen vor blieben und zu einer mehr oder weniger starken Ungenauigkeit des Modells und damit insbesondere der damit erstellten Prognosen führen würden.

Damit können insbesondere auch Eingangs- und/oder Ausgangsdaten des Systems, die dessen Betriebszustand mit bestimmen, aber nicht - z.B. messtechnisch - zugänglich sind, einbezogen werden. Dadurch ist die Genauigkeit der Prognose erhöht.

Eine besonders bevorzugte Ausführungsform der Erfindung umfasst eine Anzahl an Analysemodulen, welche jeweils ein dynamisches Modell mindestens eines Systems der technischen Anlage umfassen. Weiterhin ist dabei mindestens ein weiterer KI-basierter Algorithmus vorgesehen ist, mittels welchem Korrelationen mindestens zwischen den Ein- und/oder Ausgabedaten eines ersten und den Ein- und/oder Ausgabedaten eines zweiten der Analysemodule ermittelbar sind.

Diese Ausführungsform der Erfindung betrifft die Erweiterung der erfindungsgemäßen Vorrichtung auf die parallele Überwachung zusammenwirkender Systeme, wobei das Zusammenwirken in Form einer Beziehung zwischen den jeweiligen Ein- und/oder Ausgabedaten der Analysemodule vom weiteren KI-basierten Algorithmus ermittelt und als weitere Zusammenhänge etabliert werden (beispielsweise in Form einer Gleichung, eines neuronalen Netzes oder einer Kennlinie).
Dadurch entsteht ein genaues dynamisches Modell der zusammenwirkenden Systeme umfassend das dynamische Modell der einzelnen Systeme sowie die weiteren Zusammenhänge.

So ist das momentane und/oder zukünftige Betriebsverhalten sowohl der einzelnen Systeme, als auch das Betriebsverhalten der durch das Zusammenwirken der System entstehenden Anlage beschreibbar.

Dabei sind vorteilhaft mittels der Korrelationen weitere Ausgabedaten ermittelbar, welche das momentane und/oder zukünftige Betriebsverhalten der technischen Anlage charakterisieren, wobei diese weiteren Ausgabedaten systemübergreifende Informationen beinhalten.

Korrelationen zwischen den genannten Daten deuten auf gegenseitige Abhängigkeiten hin, wodurch die dadurch gewonnen weiteren Ausgabedaten in ihrer Aussagekraft über die Systemgrenzen der beteiligten Einzelsysteme hinausgehen und damit das Verhalten einer größeren Einheit der technischen Anlage, umfassend mindestens zwei Systeme, beschreiben.

Bevorzugt umfassen die Betriebs- und/oder Strukturdaten der technischen Anlage eine oder mehrere Informationen aus der Gruppe {Prozessdaten, Betriebsmeldungen, Warnmeldungen, Störmeldungen, Beobachtungsnotizen, Kommentare, Aufbau der technischen Anlage, Hierarchie der Anlagenkomponenten}.

Die Prozessdaten können dabei on- und offline aus einem Leitsystem der technischen Anlage und/oder einem damit verbundenen Untersystem gewonnen werden oder auch manuell eingegeben werden

Die Betriebsmeldungen umfassen insbesondere Sensordaten und davon abgeleitete Informationen über den Betriebszustand der technischen Anlage und deren Systeme.

Die Strukturdaten beinhalten insbesondere Informationen über den Aufbau der technischen Anlage hinsichtlich der von der technischen Anlage umfassten Systeme (Anlagenkomponenten, Untersysteme, Systemgruppen) sowie deren hierarchischem Zusammenwirken und Priorisierung.

Diese Daten können dabei momentane und/oder historische Daten umfassen, welche beispielsweise in einem Kurz- oder Langzeitarchiv oder in einem Engineeringsystem abgelegt sind.

Bevorzugt sind die Betriebs- und/oder Strukturdaten von einem Prozessleitsystem bereit gestellt.

Zur Bedienung und Beobachtung von komplexeren technischen Anlagen wird meist ein Prozessleitsystem eingesetzt in welchem die genannten Daten vorhanden sind oder während des Betriebs anfallen und gespeichert werden. Bei dieser Ausführungsform ist die Datenbereitstellung daher besonders aufwandsarm.

Die Erfindung führt weiterhin zu einem Verfahren zur Überwachung einer mehrere Systeme umfassenden technischen Anlage, insbesondere einer Kraftwerksanlage, gemäß Anspruch 10.

Bevorzugt umfasst die Verbesserung des dynamischen Modells die Identifizierung von solchen Eingabedaten, welche zuvor noch nicht vom dynamischen Modell genutzt sind, und mit Hilfe dieser Eingabedaten ist das dynamische Modell erweiterbar.

In einer weiteren Ausführungsform sind eine Anzahl an dynamischen Modellen, welche jeweils mindestens ein System der technischen Anlage beschreiben, und mindestens ein weiterer KI-basierter Algorithmus vorgesehen, mittels welchem Korrelationen mindestens zwischen den Ein- und/oder Ausgabedaten eines ersten und den Ein- und/oder Ausgabedaten eines zweiten der dynamischen Modelle ermittelbar sind.

Vorteilhaft sind mittels der Korrelationen weitere Ausgabedaten ermittelbar, welche das momentane und/oder zukünftige Betriebsverhalten der technischen Anlage charakterisieren, wobei diese weiteren Ausgabedaten systemübergreifende Informationen beinhalten.

Die im Zusammenhang mit der erfindungsgemäßen Vorrichtung und ihren vorteilhaften Ausgestaltungen gemachten Ausführungen sind auf das erfindungsgemäße Verfahren übertragbar und werden daher hier nicht wiederholt.

Zusammengefasst lässt sich die Erfindung in das folgende Umfeld einbetten:
Künstlich Intelligenz zur Diagnose von Systemen einer technischen Anlage, beispielsweise einer Kraftwerksanlage, kann dazu eingesetzt werden, vorausschauend Fehler zu prognostizieren, wobei alle in der technischen Anlage zur Verfügung stehenden Daten herangezogen werden können.

Die Schwerpunkte liegen dabei z.B. auf genetischen Algorithmen und neuronalen Netzen zur Modellierung und Bewältigung von Überwachungs-, insbesondere Diagnoseaufgaben.

Von besonderem Interesse ist es, den Aufwand der Diagnoseapplikationen in der technischen Anlage deutlich zu reduzieren und darüber hinaus eine verbesserte Optimierung der Regelungen zu ermöglichen.

Eine Verbesserung ist erreicht, wenn einerseits die relevanten Aggregateigenschaften von Systemen der technischen Anlage, wie beispielsweise Leistung und Energieverbrauch, im Hinblick auf gesetzliche Vorschriften und Ressourcenknappheit reduziert werden.
Auf der anderen Seite sollen Kundenwünsche nach verbesserter Leistung und Diagnosemöglichkeiten erfüllt werden.

In die Diagnose mittels genetischer / evolutionärer Algorithmen sind sowohl Großsysteme als auch kleine Systeme integrierbar.

Durch die Verbindung von genetischen (evolutionären) Algorithmen mit Kohonen- und/oder Neuronalen Netzen jeglicher Art ist es möglich, Aussagen über den Zustand mindestens eines Systems der technischen Anlage zu ermöglichen.

Der Einsatz von genetischen Algorithmen ermöglicht es darüber hinaus auch, solche Parameter in die Bestimmung des Zustandes eines Systems der technischen Anlage einzubeziehen, die nicht direkt auf diese Komponente der technischen Anlage wirken, beispielsweise als Ein- und/oder Ausgangssignale oder Medienströme.

Die Methodiken von genetischen Algorithmen (Suchalgorithmen) erlauben darüber hinaus auch dann eine Berechnung des Zustands mindestens eines Systems oder der gesamten technischen Anlage, wenn die Eingangsparameter zur Bestimmung des Ist-Zustandes weitgehend unbekannt und/oder nicht oder nur schwer ermittelbar sind, beispielsweise mittels einer aufwendigen Messung.

Der Einsatz von künstlicher Intelligenz zur Diagnose ermöglicht es weiterhin, dass bei komplexen Anlagenzuständen Abweichungen von errechneten Ist-Zuständen dem Betreiber der technischen Anlage gemeldet werden.
Hierbei kann zunächst auf einen konkreten Fehlerhinweis, z.B. über den eng eingegrenzten Fehlerort, verzichtet werden, da Ausfälle z.B. von Sensoren meist von einem vorhandenen Leitsystem sowieso erfasst und gemeldet werden.

Wichtig im Zusammenhang mit der Erfindung ist vielmehr die Erkennung von schleichenden Prozessen - die nicht unbedingt einen sofortigen Ausfall einer Anlagenkomponente hervor rufen - wie Verschmutzung, Leistungsabfall durch Abnutzung, Alterung usw., die vom Menschen durch den "Gewöhnungseffekt" nicht richtig wahrgenommen bzw. richtig interpretiert werden.

In vielen Fällen führen derartige schleichende Veränderungen irgendwann einmal zum Ausfall der technischen Anlage.
Die Veränderungen werden aber oft nicht erkannt, da eine vorhandene Regelungseinrichtung beispielsweise versucht, dieser Veränderung entgegenzuwirken: Beispielsweise werden Verschmutzungen an den Schaufeln eines Lüfters durch eine Verstellung der Lüfterschaufeln kompensiert. Oder die Regelungseinrichtung kompensiert nachlassende Leistungen von Öl- oder Kühlpumpen durch neue Sollwertvorgaben; dann wird die Temperatur z.B. eines Lagers nur sehr langsam höher, da die Regelungseinrichtung bei einem sich anbahnenden Defekt oftmals den Zeitpunkt des Systemausfalls hinauszögern kann. Jedoch werden dabei die geregelten Systeme immer höher beansprucht und der Verschleiß steigt. Der Benutzer der technischen Anlage bekommt davon nichts mit, da gerade wegen der Regelungseinrichtung die technische Anlage weiter funktioniert, obwohl ein oder mehrere Systeme der technischen Anlage sich ihrer Verschleißgrenze nähern.

Ein riskanter Betrieb liegt insbesondere dann vor, wenn ein funktionierendes System unter erhöhter Beanspruchung betrieben wird; eine derartige Beanspruchung kann durch eine vorher genannte Regelungseinrichtung durch eine Sollwertvorgabe verursacht sein.
Beispielsweise ist ein Kühlkreislauf für einen Dauerbetrieb mit 50% Leistung ausgelegt. Dann kann ein dauerhafter Betrieb mit 70-80% Leistung schon bald zu gravierenden Schäden führen. Ein sich anbahnender Ausfall einer Leck geschlagenen Kühlpumpe bleibt jedoch unbemerkt, da die Regelungseinrichtung zur Aufrechterhaltung der Funktion des Kühlkreislaufs den Sollwert (z.B. den Druck) für die Kühlpumpe immer weiter erhöht, was den Ausfall der Pumpe weiter beschleunigt. Erst wenn der Ausfall tatsächlich eingetreten ist, wird der Fehler der Kühlpumpe als Fehlerursache des Kühlsystems bemerkt.
Hier können eine erfindungsgemäße Vorrichtung sowie ein Verfahren Abhilfe schaffen.

Genetische Algorithmen in Verbindung mit intelligenten, lernfähigen Netzwerken erlauben darüber hinaus die Erkennung von riskanten Betriebsweisen der technischen Anlage, Überlastung bzw. falsche Auslastung von Aggregaten und Systemen u.s.w.. Dies wird vorteilhaft dem Betreiber / Bediener der technischen Anlage gemeldet, beispielsweise in Form eines Betriebsdiagramms (z.B. eines Kennfelds), aus dem sowohl der momentane Betrieb, als auch ein vorgeschlagener, verbesserter Betrieb hervorgeht.

Die Darstellung von Abweichungen kann vorteilhaft mittels Kennfelder erfolgen. Basierend auf genetischen Algorithmen ist neben der Fehlervoraussage auch eine Optimierung des Betriebs der technischen Anlage möglich.

Weiterhin können mittels genetischer Algorithmen Informationen für das Management-Personal der technischen Anlage gewonnen werden, die eine Aussage über den Gesamtzustand der Anlage und ggf. über in einem Zeitabstand notwendige Wartungsmaßnahmen ermöglichen.

Vorteilhaft ermöglicht der Einsatz von Künstlicher Intelligenz eine Onlineberechnung von Systemzuständen, d.h. der Betreiber kann auf ein "Fehlverhalten" in seiner Anlage hingewiesen werden und ist dann in der Lage, vorrausschauende Berechnungen anzustellen, die ihm eine neue Betrachtungsweise ermöglichen.

### Beispiel:

Eine erfindungsgemäße Vorrichtung, z.B. in Form eines Diagnosesystems, meldet dem Betreiber "Fehler an Kohlemühle XX Bereich Mahlwalzen"; durch Gegenkontrolle wird festgestellt, dass eine Wartungsmaßnahme der Kohlemühle nötig ist(z.B. weil dies so vom Hersteller im zugehörigen Wartungshandbuch vorgeschrieben ist).

Durch vorrausschauende Berechnung kann dann durch das erfindungsgemäße Diagnosesystem bestimmt werden, was passiert, wenn der Betreiber seine technische Anlage ohne Wartungsmaßnahme trotzdem weiter in Betrieb lässt und wann der tatsächliche Eintritt eines Betriebsausfalls der Kohlemühle zu erwarten ist.

Mit der Verbindung von genetischen Algorithmen und Neuronalen Netzen sowie ggf. Kohonen-Netzwerken lässt sich eine Vielzahl an Aussagen hinsichtlich des aktuellen und/oder zukünftigen Zustandes der technischen Anlage treffen, insbesondere, wann eine Wartungsmaßnahme erforderlich sein wird.

Im Folgenden werden zwei Ausführungsbeispiele der Erfindung näher dargestellt. Es zeigen:
- FIG 1: eine Systemhierarchie, wie sie üblicherweise in technischen Anlagen vorkommt,
- FIG 2: eine erfindungsgemäße Vorrichtung, und
- FIG 3: eine weitere Ausführungsform einer erfindungsgemäßen Vorrichtung mit zwei Analysemodulen.

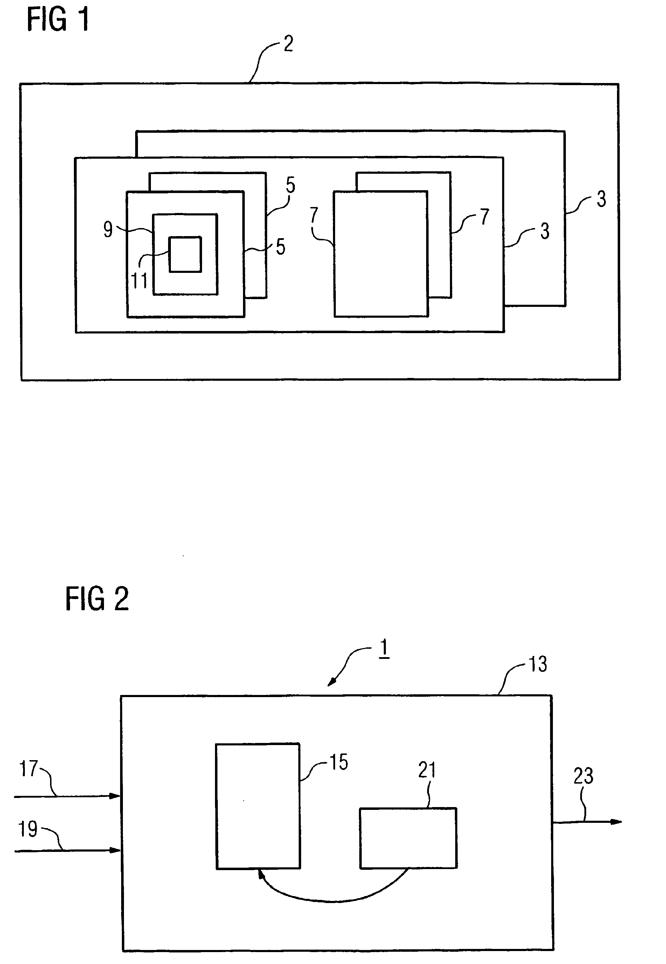

FIG 1 zeigt beispielhaft einen hierarchischen Systemaufbau einer technischen Anlage 2.

Die technische Anlage 2 ist ausgebildet als eine Kraftwerksanlage zur Erzeugung von elektrischer Energie und umfasst zwei Kraftwerksblöcke 3.

Jeder Kraftwerksblock 3 umfasst dabei zwei Turbinen 5, beispielsweise Gasturbinen. Diese Turbinen 5 wiederum beinhalten jeweils einen Kühlkreislauf 9.

Dieser Kühlkreislauf 9 umfasst dabei eine Turbinenschaufel 11 der Turbine 5.

Jedes der genannten Elemente soll im Zusammenhang mit der Erfindung unter den Begriff System fallen. Ein System kann also eine einfache, isolierte Komponente wie beispielsweise eine Turbinenschaufel, aber auch ein komplexes System, wie den Kraftwerksblock 3 oder auch mehrere Kraftwerksblöcke 3 umfassen.

Die FIG 2 zeigt eine erfindungsgemäße Vorrichtung 1 mit einem Analysemodul 13.

Dem Analysemodul 13 sind dabei Betriebsdaten 17 und Strukturdaten 19 der technischen Anlage als Eingabedaten zugeführt.

Bei den Betriebsdaten 17 kann es sich beispielsweise um Online-Messdaten handeln, welche in der technischen Anlage oder im System selbst mittels Sensoren aufgenommen werden. Es kann sich dabei aber auch um aus diesen Messdaten abgeleitete Daten handeln, welche beispielsweise in einem Rechnersystem erzeugt werden. Ferner können die Betriebsdaten 17 auch Offline-Messdaten umfassen, welche beispielsweise in einem Archiv abgelegt sind oder manuell eingegeben werden.

Die Strukturdaten 19 beschreiben die technische Anlage oder das System selbst. Sie beinhalten insbesondere Informationen über die Zusammenschaltung von Teilsystemen, welche vom System umfasst sind und deren hierarchische Anordnung.

Ein dynamisches Modell 15 ist zur Modellierung des Systemverhaltens vorgesehen. Dieses Modell 15 kann beispielsweise analytische Gleichungen, aber auch Methoden der künstlichen Intelligenz wie beispielsweise neuronale Netze, Fuzzy Logic oder genetische Algorithmen umfassen. Des Weiteren können insbesondere einfache Kennlinien zur Beschreibung des Systemverhaltens vorgesehen sein.

Ein KI-basierter Algorithmus 21 ist zur Verbesserung des dynamischen Modells 15 während des Betriebs des Systems 15 vorgesehen.

Dieser KI-basierte Algorithmus 21 kann beispielsweise ausgebildet sein als ein genetischer Algorithmus.

Eine wichtige Rolle dieses Algorithmus 21 besteht im Vornehmen von dynamischen Anpassungen im Modell 15, um eine Verbesserung dieses Modells 15 zu erreichen in dem Sinne, dass ein verbessertes Modellverhalten, also eine bessere Übereinstimmung mit dem Verhalten des realen Systems erreicht wird. Beispielsweise kann zur Beurteilung dieses Sachverhalts ein Modellierungsfehler herangezogen werden, beispielsweise die Differenz zwischen dem tatsächlichen zeitlichen Verhalten des Systems und dem modellierten zeitlichen Verhalten dieses Systems. Mittels des KI-basierten Algorithmus 21 kann dann eine Verbesserung des Modells 15 erfolgen. Dabei wird der KI-basierte Algorithmus 21 insbesondere dafür verwendet, bei der Modellierung noch nicht berücksichtigte Parmameter und Daten, welche von den Betriebsdaten 10 und/oder den Strukturdaten 19 umfasst, aber zur Modellierung noch nicht herangezogen sind, zu identifizieren und weitere Zusammenhänge, beispielsweise Gleichungen oder Kennlinien, umfassend die genannten identifizierten Parameter und/oder Daten, zu etablieren und dem dynamischen Modell 15 hinzuzufügen.

Ein als genetischer Algorithmus ausgebildeter KI-basierter Algorithmus 21 optimiert vom dynamischen Modell 15 umfasste Zusammenhänge wie beispielsweise Gleichungen, Kennlinien oder Netzparameter eines neuronalen Netzes, indem er evolutionär Parameter und Daten kombiniert und re-kombiniert und dabei insbesondere neue Zusammenhänge entdeckt, welche vom dynamischen Modell 15 noch nicht umfasst sind.

Insofern geht die beschriebene, im Zusammenhang mit der Erfindung verwendete Modellierung und deren Verbesserung mittels des KI-basierten Algorithmus 21 über bekannte Methoden von z.B. Supervised Learning und klassische Modellierung hinaus.

Das Analysemodell 13 erzeugt als Ausgabedaten 23 Aussagen über das Betriebsverhalten des Systems. Es kann sich dabei beispielsweise um ein momentanes oder auch zukünftiges Betriebsverhalten des Systems (Erstellung einer Prognose handeln. Beispielsweise werden dem Analysemodul 13 Betriebsdaten 17 zugeführt und angenommen, dass diese Betriebsdaten über einen bestimmten zukünftigen Zeitraum andauern werden. Die Ausgabedaten 23 erlauben dann eine Aussage beispielsweise dahingehend, ob und ggf. wann eine Störung des Systembetriebs zu erwarten ist. Diese Aussage ist umso genauer, je genauer das Modell 15 das tatsächliche Systemverhalten widerspiegelt. Bei der erfindungsgemäßen Vorrichtung 1 wird insbesondere durch den KI-basierten Algorithmus 21 für eine hohe Genauigkeit des Modells 15 gesorgt, so dass die vom Analysemodul 13 als Ausgabedaten 23 ermittelten Prognosen und Diagnosen sehr genau sind.

Die Ausgabedaten 23 umfassen insbesondere qualifizierte Meldungen hinsichtlich Fehlererkennung (Trendanalyse, Verschleiß und Alterung), Wirkungsgrad, Prozessqualität und erwartetes zukünftiges Verhalten des Systems und der technischen Anlage.

Um derartige Meldungen zu erzeugen, kann vom Analysemodul 13 ein Regelwerk umfasst sein, um vom Modell 15 generierte Ausgangsdaten in die genannten Meldungen zu transformieren. Das Regelwerk kann dabei insbesondere Regeln für die Prognose eines kurzfristigen Betrachtungszeitraum sowie Regeln für einen langfristigen Betrachtungszeitraum umfassen.

Dem Regelwerk können dabei neben den Ausgangsdaten des Modells 15 weitere Informationen zugeführt sein, beispielsweise Meldungen und Alarme betreffend das System oder die technische Anlage.

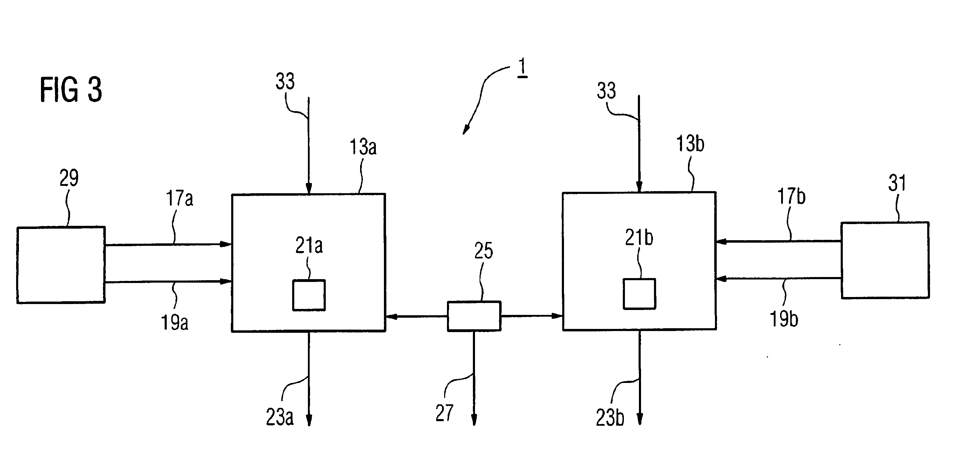

In der Darstellung der FIG 3 umfasst eine erfindungsgemäße Vorrichtung 1 zwei Analysemodule 13a und 13b.

Dem Analysemodul 13a sind dabei Betriebsdaten 17a und Strukturdaten 19a eines Kühlsystems 29 zugeführt; das Analysemodul 13b erhält als Eingangsdaten Betriebsdaten 17b und Strukturdaten 19b eines Generators 31.

Des Weiteren sind beiden Analysemodulen 13a,13b Umgebungsdaten 33 der technischen Anlage zugeführt, beispielsweise die Umgebungstemperatur, Luftfeuchtigkeit, Luftdruck usw.

Jedes Analysemodul 13a,13b ermittelt Ausgabedaten 23a bzw. 23b, welche das Betriebsverhalten des jeweils analysierten Systems 29 bzw. 31 charakterisieren.

Da das Kühlsystem 29 und der Generator 31 keine verfahrenstechnisch isoliert voneinander zu betrachtenden Systeme sind, ist damit zu rechnen, dass insbesondere sich verändernde Betriebsdaten 17a des Kühlsystems 29 Einfluss nehmen auf das Systemverhalten des Generators 31 und damit auf die Ausgabedaten 23b des Analysemoduls 13b. Dasselbe gilt für sich verändernde Betriebsdaten 17b des Generators 31, von welchen erwartet werden kann, dass sich daraufhin das Betriebsverhalten des Kühlsystems 29 und damit die Ausgabedaten 23a des Analysemoduls 13a verändern.

Um derartige Korrelationen aufzuspüren und zu quantifizieren ist der weitere KI-basierte Algorithmus 25 vorgesehen.

Dieser kann beispielsweise ausgebildet sein als ein weiterer genetischer Algorithmus, welcher weitere Ausgabedaten 27 erzeugt, welche systemübergreifende Informationen umfassen, also über die Charakterisierung des Verhaltens eines der Systeme hinausgehen und insbesondere Informationen über das Zusammenwirken der Systeme 29 und 31 und deren gegenseitige Abhängigkeiten enthalten.

Der weitere KI-basierte Algorithmus 25 ist dabei also zuständig für Identifikation und Etablierung übergeordneter, systemübergreifender Zusammenhänge. Diese Zusammenhänge können beispielsweise Gleichungen, Kennlinien oder neuronale Netze umfassen, die vom weiteren KI-basierten Algorithmus 25 erzeugt und/oder parametriert werden.

Die Strategie zur Identifikation und Etablierung derartiger Systemübergreifender Zusammenhänge kann dabei ähnlich sein wie bei der im Zusammenhang mit FIG 2 genannten Identifikation und Etablierung von systeminternen weiteren Zusammenhängen durch die KI-basierten Algorithmen 21a,21b.

Mittels einer erfindungsgemäßen Vorrichtung und eines erfindungsgemäßen Verfahrens soll es insbesondere möglich sein, ohne aufwendige Diagnosemittel aus vorhandenen Betriebs- und Strukturdaten eines Systems Aussagen über das Systemverhalten, insbesondere über das zukünftige, zu machen.

Dazu ist ein selbst-adaptierendes dynamisches Modell des Systems vorgesehen, welches von einem KI-basierten Algorithmus während des Betriebs verbessert wird.

Der KI-basierte Algorithmus 21 wird insbesondere dazu verwendet, in den meist ohnehin verfügbaren Betriebs- und/oder Strukturdaten einer technischen Anlage, welche beispielsweise in einem Leitsystem verarbeitet werden, nach Zusammenhängen zu suchen und die dabei identifizierten Zusammenhänge in das dynamische Modell zu integrieren, um dieses schrittweise zu verbessern.

Es ist also nicht notwendig, dass ein analytisches Modell des Systems oder der technischen Anlage vorliegt. Vielmehr wird das Modell ausgehend beispielsweise von einer sehr einfachen Kennlinie eines Kennlinienfeldes und/oder von einfachen Gleichungen schrittweise verbessert durch eine Korrelationsanalyse der Betriebs- und Strukturdaten mittels des KI-basierten Algorithmus unter Etablierung der dabei ermittelten Korrelationen beispielsweise in Form von weiteren Kennlinien, Gleichungen usw.

Im Unterschied zu herkömmlichen Überwachungs- und Diagnosevorrichtungen beruht die vorliegende vorzugsweise auf einer datenbasierten Methode, wobei Abhängigkeiten zwischen Teilen von vorliegenden Betriebsdaten und/oder zwischen Teilen von Strukturdaten einer technischen Anlage mit Methoden der künstlichen Intelligenz aufgespürt und als quantifizierte Zusammenhänge, beispielsweise Gleichungen und/oder Kennlinien, etabliert werden, so dass ein genaues dynamisches Modell mindestens eines Systems der technischen Anlage entsteht.

## Patentansprüche

1. Vorrichtung (1) zur Überwachung einer mehrere Systeme umfassenden technischen Anlage (2), insbesondere einer Kraftwerksanlage, mit ;
• mindestens einem Analysemodul (13,13a,13b), welches ein dynamisches Modell (15) mindestens eines Systems (3,5,7,9,11) der technischen Anlage (2) umfasst, wobei dem Analysemodul (13,13a,13b) Betriebs-Daten (17,17a,17b) oder Betriebs-/und Strukturdaten (17,17a,17b,19,19a,19b) der technischen Anlage (2) als Eingabedaten zuführbar sind, und
• mindestens einem vom Analysemodul (13,13a,13b) umfassten KI-basierten Algorithmus (21,21a,21b), mittels welchem das dynamische Modell (15) des Systems (3,5,7,9,11) während des Betriebs des Systems (3,5,7,9,11) verbesserbar ist,
wobei mittels des Analysemoduls ((13,13a,13b) Ausgabedaten (23,23a,23b) ermittelbar sind, welche das momentane und/oder zukünftige Betriebsverhalten des Systems (3, 5, 7, 9, 11) charakterisieren,
**dadurch gekennzeichnet, dass** der KI-basierte Algoutthmus in Betriebsdaten (17,17a,17b) oder Betriebs-/und Strukturdaten (17,17a,17b,19,19a,19b) des Systems Abhängigkeiten zwischen Betriebsdaten (17,17a,17b) oder Betriebs-/und Strukturdaten (17,17a,17b,19,19a,19b) mittels der Methoden der künstlichen Intelligenz sucht und die dabei identifizierten Zusammenhänge in das dynamische Modell (15) als neue Zusammenhänge integriert und dieses **dadurch** verbessert.

2. Vorrichtung (1) nach Anspruch 1,
**dadurch gekennzeichnet, dass**
die Verbesserung des dynamischen Modells (15) die Identifizierung von solchen Eingabedaten umfasst, welche zuvor noch nicht vom dynamischen Modell (15) genutzt sind, und dass mit Hilfe dieser Eingabedaten das dynamische Modell (15) erweiterbar ist.

3. Vorrichtung (1) nach Anspruch 1 oder 2, bei der das dynamische Modell (15) ein oder mehrere Elemente aus der Gruppe (Kennlinie, physikalische Gleichung, neuronales Netz, Fuzzy Logic, genetischer Algorithmus) umfasst.

4. Vorrichtung (1) nach einem der Ansprüche 1 bis 3, wobei das dynamische Modell (15) mindestens ein neuronales Netz umfasst, welches mit historischen Betriebsdaten des Systems (3,5,7,9,11) trainierbar ist.

5. Vorrichtung (1) nach einem der Ansprüche 1 bis 4,
**dadurch gekennzeichnet, dass**
eine Anzahl an Analysemodulen (13,13a,13b) vorhanden sind, welche jeweils ein dynamisches Modell (15) mindestens eines Systems (3,5,7,9,11) der technischen Anlage (2) umfassen und dass mindestens ein weiterer KI-basierter Algorithmus (25) vorgesehen ist, mittels welchem Korrelationen mindestens zwischen den Ein- und/oder Ausgabedaten eines ersten und den Ein- und/oder Ausgabedaten eines zweiten der Analysemodule (13,13a,13b) ermittelbar sind.

6. Vorrichtung (1) nach Anspruch 5,
**dadurch gekennzeichnet, dass**
mittels der Korrelationen weitere Ausgabedaten (27) ermittelbar sind, welche das momentane und/oder zukünftige Betriebsverhalten der technischen Anlage (1) charakterisieren, wobei diese weiteren Ausgabedaten (27) systemübergreifende Informationen beinhalten.

7. Vorrichtung (1) nach einem der Ansprüche 1 bis 6, wobei die Betriebs- (17,17a,17b) und/oder Strukturdaten (19,19a,19b) der technischen Anlage (2) eine oder mehrere Informationen aus der Gruppe {Prozessdaten, Betriebsmeldungen, Warnmeldungen, Störmeldungen, Beobachtungsnatizen, Kommentare, Aufbau der technischen Anlage, Hierarchie der Anlagenkomponenten} umfassen.

8. Vorrichtung (1) nach einem der Ansprüche 1 bis 7, wobei
die Betriebs- (17,17a,17b) und/oder Strukturdaten (19,19a,19b) der technischen Anlage (2) momentane und/oder historische Daten der technischen Anlage (2) umfassen.

9. Vorrichtung (1) nach einem der Ansprüche 1 bis 8, wobei
die Betriebs- (17,17a,17b) und/oder Strukturdaten (19,19a,19b) der technischen Anlage (2) von einem Prozessleitsystem der technischen Anlage (2) bereitgestellt sind.

10. Verfahren zur Überwachung einer mehrere Systeme umfassenden technischen Anlage (2), insbesondere einer Kraftwerksanlage, mit
folgenden Schritten:
• Einem dynamischen Modell mindestens eines Systems (3, 5, 7, 9, 11) der technischen Anlage (2) werden BetriebsDaten (17,17a,17b) oder Betriebs-/und Strukturdaten (17,17a,17b,19,19a,19b) der technischen Anlage (2) als Eingabedaten zuführt,
• mittels eines KI-basierten Algorithmus (21,21a,21b) wird das dynamische Modell (15) des Systems (3,5,7,9,11) während des Betriebs des Systems (3,5,7,9,11) verbessert, und
• mittels des dynamischen Modells (15) werden Ausgabedaten (27) ermittelt, welche das momentane und/oder zukünftige Betriebsverhalten des Systems (3,5,7,9,11) charakterisieren, **dadurch gekennzeichnet dass** in Betriebsdaten (17,17a,17b) oder Betriebs-/und Strukturdaten (17,17a,17b,19,19a,19b) des Systems (3,5,7,9,11) Abhängigkeiten zwischen Betriebsdaten (17,17a,17b) oder Betriebs-/und Strukturdaten (17,17a,17b,19,19a,19b) mittels der Methoden der künstlichen Intelligenz gesucht wird und die dabei identifizierten Zusammenhänge in das dynamische Modell als neue Zusammenhänge integriert werden.

11. Verfahren nach Anspruch 10,
**dadurch gekennzeichnet, dass** die Verbesserung des dynamischen Modells (15) die Identifizierung von solchen Eingabedaten umfasst, welche zuvor noch nicht vom dynamischen Modell (15) genutzt sind, und dass mit Hilfe dieser Eingabedaten das dynamische Modell (15) erweiterbar ist.

12. Verfahren nach einem der Ansprüche 10 oder 11,
**dadurch gekennzeichnet, dass**
eine Anzahl an dynamischen Modellen (15) vorgesehen sind, welche jeweils mindestens ein System (3,5,7,9,11) der technischen Anlage (2) beschreiben und dass mindestens ein weiterer KI-basierter Algorithmus (21,21a,21b) vorgesehen ist, mittels welchem Korrelationen mindestens zwischen den Ein- und/oder Ausgabedaten eines ersten und den Ein- und/oder Ausgabedaten eines zweiten der dynamischen Modelle (15) ermittelbar sind.

13. Verfahren nach Anspruch 12,
**dadurch gekennzeichnet, dass**
mittels der Korrelationen weitere Ausgabedaten ermittelbar sind, welche das momentane und/oder zukünftige Betriebsverhalten der technischen Anlage (2) charakterisieren, wobei diese weiteren Ausgabedaten systemübergreifende Informationen beinhalten.

## Claims

1. Device (1) for monitoring a technical facility (2) comprising multiple systems, in particular a power plant facility, with
• at least one analysis module (13, 13a, 13b), which includes a dynamic model (15) at least of one system (3, 5, 7, 9, 11) of the technical facility (2), whereby operational data (17, 17a, 17b) or operational and structural data (17, 17a, 17b, 19, 19a, 19b) from the technical facility (2) can be conveyed to the analysis module (13, 13a, 13b) as input data, and
• at least one algorithm (21, 21a, 21b) based on artificial intelligence included by the analysis module (13, 13a, 13b), by means of which the dynamic model (15) of the system (3, 5, 7, 9, 11) can be improved during the operation of the system (3, 5, 7, 9, 11),
whereby output data (23, 23a, 23b) is identifiable by means of the analysis model (13, 13a, 13b), said data characterizing the current and/or future operational behaviour of the system (3, 5, 7, 9, 11)
**characterised in that** the algorithm based on artificial intelligence searches for dependencies between operational data (17, 17a, 17b) or operational and structural data (17, 17a, 17b, 19, 19a, 19b) in operational data (17, 17a, 17b) or operational and structural data (17, 17a, 17b, 19, 19a, 19b) from the system by means of the methods of artificial intelligence, and integrates into the dynamic model (15) the correlations identified in doing so as new correlations, and thereby improves this.

2. Device (1) according to claim 1, **characterised in that** the improvement of the dynamic model (15) includes the identification of that input data that has not yet been previously used by the dynamic model (15), and **in that** the dynamic model (15) can be expanded with the help of this input data.

3. Device (1) according to claim 1 or 2, in which the dynamic model (15) includes one or more elements from the group {characteristic, physical equation, neural network, fuzzy logic, genetic algorithm}.

4. Device (1) according to one of the claims 1 to 3, whereby the dynamic model (15) includes at least one neural network, which can be trained using historical operational data from the system (3, 5, 7, 9, 11).

5. Device (1) according to one of the claims 1 to 4,
**characterised in that** a number of analysis modules (13, 13a, 13b) are available, which include in each case a dynamic model (15) of at least one system (3, 5, 7, 9, 11) of the technical facility (2), and **in that** at least one additional algorithm (25) based on artificial intelligence is provided, by means of which correlations at least between the input and/or output data of a first of the analysis modules (13, 13a, 13b) and the input and/or output data of a second of the analysis modules (13, 13a, 13b) are identifiable.

6. Device (1) according to claim 5, **characterised in that** additional output data (27) is identifiable by means of the correlations, said data characterizing the current and/or future operational behaviour of the technical facility (1), whereby this additional output data (27) includes cross-system information.

7. Device (1) according to one of the claims 1 to 6, whereby the operational data (17, 17a, 17b) and/or structural data (19, 19a, 19b) of the technical facility (2) includes one or more items of information from the group {process data, operational messages, warning messages, disruption messages, monitoring notifications, comments, design of the technical facility, hierarchy of the facility components}.

8. Device (1) according to one of the claims 1 to 7, whereby the operational (17, 17a, 17b) and/or structural data (19, 19a, 19b) of the technical facility (2) includes current and/or historical data from the technical facility (2).

9. Device (1) according to one of the claims 1 to 8, whereby the operational data (17, 17a, 17b) and/or structural data (19, 19a, 19b) from the technical facility (2) is provided by a process control system of the technical facility (2).

10. Method for monitoring a technical facility (2) comprising multiple systems, in particular a power plant facility, with the following steps:
• Operational data (17, 17a, 17b) or operational and structural data (17, 17a, 17b, 19, 19a, 19b) from the technical facility (2) is conveyed to a dynamic model of at least one system (3, 5, 7, 9, 11) of the technical facility (2) as input data,
• the dynamic model (15) of the system (3, 5, 7, 9, 11) is improved during the operation of the system (3, 5, 7, 9, 11) by means of an algorithm (21, 21a, 21b) based on artificial intelligence and
• by means of the dynamic model (15), output data (27) is identified which characterizes the current and/or future operational behaviour of the system (3, 5, 7, 9, 11)
**characterised in that** dependencies between operational data (17, 17a, 17b) or operational and structural data (17, 17a, 17b, 19, 19a, 19b) are searched for in operational data (17, 17a, 17b) or operational and structural data (17, 17a, 17b, 19, 19a, 19b) from the system by means of the methods of artificial intelligence and the correlations identified in doing so are integrated into the dynamic model as new correlations.

11. Method according to claim 10, **characterised in that** the improvement of the dynamic model (15) includes the identification of that input data which has not yet been previously used by the dynamic model (15), and **in that** the dynamic model (15) can be expanded with the help of this input data.

12. Method according to one of the claims 10 or 11,
**characterised in that** a number of dynamic models (15) are provided, which in each case describe at least one system (3, 5, 7, 9, 11) of the technical facility, and that at least one additional algorithm (21, 21a, 21b) based on artificial intelligence is provided, by means of which correlations at least between the input and/or output data of a first of the dynamic models (15) and the input and/or output data of a second of the dynamic models (15) are identifiable.

13. Method according to claim 12, **characterised in that** additional output data is identifiable by means of the correlations, said data characterizing the current and/or future operational behaviour of the technical facility (2), whereby this additional output data includes cross-system information.

## Revendications

1. Dispositif (1) de surveillance d'une installation technique (2) comportant plusieurs systèmes, notamment une centrale électrique, ledit dispositif comportant :
au moins un module d'analyse (13, 13a, 13b), qui comprend un modèle dynamique (15) d'au moins un système (3, 5, 7, 9, 11) de l'installation technique (2), des données de fonctionnement (17, 17a, 17b) ou des données de fonctionnement et de structure (17, 17a, 17b, 19, 19a, 19b) de l'installation technique (2) pouvant être amenées au module d'analyse sous la forme de données d'entrée, et
au moins un algorithme IA (21, 21a, 21b) intégré dans le module d'analyse (13, 13a, 13b) au moyen duquel le modèle dynamique (15) du système (3, 5, 7, 9, 11) peut être amélioré pendant le fonctionnement du système (3, 5, 7, 9, 11),
des données de sortie (23, 23a, 23b) pouvant être déterminées au moyen du module d'analyse (13, 13a, 13b) et caractérisant le comportement en fonctionnement instantané et/ou futur du système (3, 5, 7, 9, 11),
**caractérisé en ce que** l'algorithme IA recherche dans des données de fonctionnement (17, 17a, 17b) ou des données de fonctionnement et de structure (17, 17a, 17b, 19, 19a, 19b) du système des relations de dépendance entre les données de fonctionnement (17, 17a, 17b) ou des données de fonctionnement et de structure (17, 17a, 17a, 19, 19a, 19b) au moyen des méthodes de l'intelligence artificielle et intègrent les relations ainsi définies dans le modèle dynamique (15) sous la forme de nouvelles relations et améliore ainsi ce système.

2. Dispositif (1) selon la revendication 1, **caractérisé en ce que** l'amélioration du modèle dynamique (15) comporte l'identification de données d'entrée qui n'ont pas encore été utilisées auparavant par le modèle dynamique (15), et **en ce que** le modèle dynamique (15) peut être agrandi à l'aide de ces données d'entrée.

3. Dispositif (1) selon l'une des revendications 1 ou 2, dans lequel le modèle dynamique (15) comporte un ou plusieurs éléments du groupe {caractéristique, équation physique, réseau neuronal, logique floue, algorithme génétique}.

4. Dispositif (1) selon l'une des revendications 1 à 3, dans lequel le modèle dynamique (15) comporte au moins un réseau neuronal qui peut être perfectionné par des données de fonctionnement historique du système (3, 5, 7, 9, 11).

5. Dispositif (1) selon l'une des revendications 1 à 4, **caractérisé par** la présence d'un certain nombre de modules d'analyse (13, 13a, 13b) qui comportent chacun un modèle dynamique (15) d'au moins un système (3, 5, 7, 9, 11) de l'installation technique (2), et en ce qu'il est prévu au moins un autre algorithme IA (25) qui permet de déterminer des corrélations au moins entre les données d'entrée et/ou de sortie d'un premier module d'analyse (13, 13a, 13b) et les données d'entrée et/ou de sortie d'un deuxième module d'analyse (13, 13a, 13b).

6. Dispositif (1) selon la revendication 5, **caractérisé en ce que** l'on détermine au moyen des corrélations d'autres données de sortie (27) qui caractérisent le comportement en fonctionnement instantané et/ou futur de l'installation technique (1), ces autres données de sortie (27) contenant des informations sur les systèmes.

7. Dispositif (1) selon l'une des revendications 1 à 6, dans lequel les données de fonctionnement (17, 17a, 17b) et/ou les données de structure (19, 19a, 19b) de l'installation technique (2) comportent une ou plusieurs informations du groupe {données de processus, comptes-rendus de fonctionnement, messages d'avertissement, messages de panne, notices d'observation, commentaires, structure de l'installation technique, hiérarchie des composants de l'installation}.

8. Dispositif (1) selon l'une des revendications 1 à 7, dans lequel les données de fonctionnement (17, 17a, 17b) et les données de structure (19, 19a, 19b) de l'installation technique (2) comportent des données instantanées et/ou historiques de l'installation technique (2).

9. Dispositif (1) selon l'une des revendications 1 à 8, dans lequel les données de fonctionnement (17, 17a, 17b) et/ou les données de structure (19, 19a, 19b) de l'installation technique (2) sont délivrées par un système de conduite de processus de l'installation technique (2).

10. Procédé de surveillance d'une installation technique (2) comportant plusieurs systèmes, notamment d'une centrale électrique, ledit procédé comportant les étapes suivantes consistant à :
- amener à un modèle dynamique d'au moins un système (3, 5, 7, 9, 11) de l'installation technique (2) des données de fonctionnement (17, 17a, 17b) ou des données de fonctionnement et de structure (17, 17a, 17b, 19, 19a, 19b) de l'installation technique (2) sous la forme de données d'entrée,
- améliorer au moyen d'un algorithme IA (21, 21a, 21b) le modèle dynamique (15) du système (3, 5, 7, 9, 11) pendant le fonctionnement du système (3, 5, 7, 9, 11), et
- déterminer au moyen du modèle dynamique (15) des données de sortie (27) qui caractérisent le comportement en fonctionnement instantané et/ou futur du système (3, 5, 7, 9, 11),
**caractérisé en ce que** l'on recherche dans des données de fonctionnement (17, 17a, 17b) ou des données de fonctionnement et de structure (17, 17a, 17b, 19, 19a, 19b) du système (3, 5, 7, 9, 11) des relations de dépendance entre des données de fonctionnement (17, 17a, 17b) ou des données de fonctionnement et de structure (17, 17a, 17b, 19, 19a, 19b) au moyen des méthodes de l'intelligence artificielle, et **en ce que** l'on intègre les relations ainsi identifiées dans le modèle dynamique sous la forme de nouvelles relations.

11. Procédé selon la revendication 10, **caractérisé en ce que** l'amélioration du modèle dynamique (15) comporte l'identification de données d'entrée qui n'ont pas encore été utilisées auparavant par le modèle dynamique (15), et **en ce que** le modèle dynamique (15) peut être agrandi à l'aide de ces données d'entrée.

12. Procédé selon l'une des revendications 10 ou 11, **caractérisé en ce qu'**il est prévu un certain nombre de modèles dynamiques (15) qui décrivent chacun au moins un système (3, 5, 7, 9, 11) de l'installation technique (2), et **en ce qu'**il est prévu au moins un autre algorithme (21, 21a, 21b) qui permet de déterminer des corrélations au moins entre les données d'entrée et/ou de sortie d'un premier modèle dynamique (15) et les données d'entrée et/ou de sortie d'un deuxième modèle dynamique (15).

13. Procédé selon la revendication 12, **caractérisé en ce que** l'on peut déterminer au moyen des corrélations d'autres données de sortie qui caractérisent le comportement en fonctionnement instantané et/ou futur de l'installation technique (2), ces autres données de sortie contenant des informations sur les systèmes.
